# EUROPEAN PATENT SPECIFICATION

(11) **EP 2 754 010 B1**
(45) Date of publication and mention of the grant of the patent: **05.12.2018**
(21) Application number: 12830598.4
(22) Date of filing: 07.09.2012
(51) Int. Cl.: G06F 3/01, H04L 29/08, G06F 3/0488, G06F 3/0481, G06F 3/0484, G06F 3/0486, H04W 8/00, H04L 12/28

(54) **APPARATUS AND CONTENT PLAYBACK METHOD THEREOF**
VORRICHTUNG UND INHALTSWIEDERGABEVERFAHREN DAFÜR
APPAREIL, ET PROCÉDÉ DE LECTURE DE CONTENU CORRESPONDANT

(30) Priority: 08.09.2011 KR 20110091215
(43) Date of publication of application: 16.07.2014
(73) Proprietor: Samsung Electronics Co., Ltd., Suwon-si, Gyeonggi-do 443-742 (KR)
(72) Inventor: HONG, Sung Soo, Seoul 136-041 (KR); BAHN, Sahng Hee, Yongin-si Gyeonggi-do 448-162 (KR); HWANG, Chang Hwan, Seoul 156-080 (KR)
(74) Representative: HGF Limited
(86) International application number: PCT/KR2012/007232
(87) International publication number: WO 2013/036075

(56) References cited:
- EP-A2- 1 439 664
- JP-A- 2010 026 983
- JP-A- 2011 055 189
- KR-A- 20070 048 449
- KR-B1- 100 718 271
- US-A1- 2010 275 135
- US-A1- 2011 163 944

## Description

### Technical Field

The present invention relates generally to an apparatus and a content playback method, and more particularly, to an apparatus for playing content corresponding to a content metaphor and a device metaphor displayed on a touch screen in a device corresponding to a device metaphor using a touch gesture.

### Background Art

Digital Living Network Alliance (DLNA) is a standardization organization following the Digital Home Working Group (DHWG) standardization organization. The DLNA defines networks in the home or office such as Personal Computer (PC) Internet networks (e.g., for computing, printing, etc.), mobile networks (e.g., smart phone, Personal Digital Assistant (PDA), notebook PC, etc.) and electronic appliance networks (e.g., television, set-top box, audio, DVD player, etc.). The DLNA includes standardization of physical media, network transmission, media format, streaming protocol, and Digital Right Management (DRM) based on Universal Plug-and-Play (UPnP).

The DLNA is classified into six layers including network connectivity layer for wired/wireless connection, a network stack using Internet Protocol version 4 (IPv4) Protocol, a media transport layer using HTTP 1.0/1.1, a device discovery, control, and media management layer using UPnP Audio/Video (AV) 1.0 and UPnP device architecture 1.0, and a media format layer using Audio, Audio/Video, and image. The DLNA has a characteristic that may independently perform command and control between devices on a network and media based on UPnP being a middleware using protocols such as IP, TCP, UDP, HTTP, XML.

DLNA Classes include a Home Network Device (HND), a Mobile Handheld Device (MHD), Home Interoperability Devices (MIU) which connects HND to HND.

The HND includes Digital Media Server (DMS), Digital Media Controller (DMC), Digital Media Renderer (DMR), Digital Media Player (DMP), and Digital Media Printer (DMPr).

The DMS includes an UPnP media server storing content (e.g., images, audio files, video files and e-book files, etc.) being a sharing target. The DMS may be implemented in a computer, a set-top box, a home theater, an MP3 Player (MP3P), a digital camera, a Personal Video Recorder (PVR), Network Attached Storage (NAS), or the like. The DMC searches a distributed content list from a DMS, sets connection of executable DRM and DMS, and controls operations associated with playback of content. The DMC may be implemented by an intelligent remote controller, a smart phone, and a tablet PC. The DMS may be implemented in the DMS or the DMR. The DMR is connected to the DMS under a control of the DMC and may play content received from the DMS. The DMR may be implemented by a television, an audio/ video receiver, a smart phone, a portable phone, a tablet PC, a monitor or a speaker. The DMP may search a content list distributed from the DMS, selects content to be played, and receive and play the selected content from the DMC. The DMP may be implemented by a television or a game console. The DMPr may output content (e.g., image files, e-book files, etc.) stored in the DMS or the DMC to a recording medium. The DMPr may be implemented by an image formation device (e.g., printer, copy machine, facsimile, photo printer, all-in one).

The MHD includes the Mobile Digital Media Server (m-DMS), Mobile Digital Media Controller (m-DMC), Mobile Digital Media Player (m-DMP), and Mobile Digital Media Uploader/Downloader (m-DMU/M-DMD).

The m-DMS is similar to a DMS of the HND. The m-DMS may be implemented by a smart phone, PDA, or a tablet PC. The m-DMC is similar to a DMC of the HND. The m-DMC may be implemented by a smart phone, a PDA, a tablet PC, or the like. The m-DMP is similar to a DMP of the HND. The m-DMP may be implemented by a smart phone, a PDA, or a tablet PC. The m-DMU/m-DMP may upload/download content using the DLNA. The m-DMU/m-DMP may be implemented by a smart phone, a camera, a camcorder, or the like.

Because the DLNA Classes are classified according to supported functions, a device providing various functions may belong to various DLNA classes. US 2010/275135 A1 relates to "intuitive data transfer between connected devices". The document appears to disclose techniques for sharing or transferring content between connected devices via dynamic collaboration user interfaces. An embodiment involves creating a first collaboration user interface between a first device and a second device. Via the first collaboration user interface, selecting content to be made available to a third device, where the selected content is currently available to the first device and not currently available to the third device. A second collaboration user interface is created between the second device and the third device. State information may be provided to a user via at least one of the first collaboration user interface and the second collaboration user interface. The second collaboration user interface causes the selected content to be available to the third device Document US2010275135 discloses a method of transferring content among a first device, a second device and a third device via a touch screen based GUI on the second device.

### Disclosure of Invention

### Technical Problem

Generally, in a network system using UPnP, a Control Point (CP) discovers a device having an Internet Protocol (IP) Address using Dynamic Host Configuration Protocol (DHCP) or an auto IP. A CP discovers a Controlled Device (CD) or the CD advertises itself such that the CP is aware of the CD. The CP sends an action request to the CD. The CD performs an action corresponding to the received action request, and replies with an action performing result (e.g., an expected processing result of an action or an error message) to the CP.

UPnP AV Architecture defines a Connection Manager Service, a Rendering Control Service, an AV Transport Service, and a Content Directory Service. In the DLNA network, the CP searches content stored in devices included in a DLNA network system using a content directory service during an UPnP service to configure an item list.

Content is scattered in a plurality of MSs in the DLNA network system. Accordingly, the CP may request a stored content list from an MS searched in the DLNA network system and provide it to the user. If the user does not know in which MS the content of a playback target is stored or which MS some of the content is stored, the user needs to discover an MS in a wired/wireless network system to find content of a playback target.

### Solution to Problem

The present invention has been made in view of the above problems, and provides an apparatus and a content playback method. The invention is disclosed in the appended claims.

According to one aspect of the present invention, there is provided a method of playing content of a wired/wireless network-connectable apparatus, the method including discovering, by the apparatus, a connectable device through the wired/ wireless network using an application provided in the apparatus, finding executable content from the discovered connectable device, displaying a content metaphor corresponding to the found executable content on a first screen of the apparatus, displaying a device metaphor corresponding the discovered connectable device on the first screen of the apparatus, and executing the executable content through the discovered connectable device.

According to another aspect of the present invention, there is provided a method of playing content of a connectable apparatus with a wired/wireless network supporting Digital Living Network Alliance (DLNA), the method including discovering, by the apparatus, a connectable device, finding content stored in the discovered connectable device, displaying a device metaphor corresponding to the discovered connectable device, on a first screen of the apparatus, displaying a content metaphor corresponding to the found content, on the first screen of the apparatus, detecting that a content metaphor corresponding to the found content is dragged and dropped to the device metaphor corresponding to the discovered connectable device, and controlling the discovered connectable device corresponding to the device metaphor to execute the content.

According to yet another aspect of the present invention, there is provided a method of playing content of a wired/wireless network-connectable apparatus, the method including displaying a device metaphor corresponding to a device connectable with the apparatus, through the wired/wireless network, on a first screen of the apparatus, displaying a content metaphor corresponding to content playable in the device connectable with the apparatus, on the first screen of the apparatus, detecting a touch input on the device metaphor displayed on the first screen, displaying a list of executable content in the touched device metaphor, and executing content of the displayed content list in the device corresponding to the device metaphor.

According to still another aspect of the present invention, there is provided a wired/ wireless network-connectable apparatus including a touch screen displaying a first screen, a communication interface unit connectable with a wired/wireless network, and a controller controlling the touch screen and the communication interface unit, wherein the controller displays a device discovered by the communication interface unit, a device metaphor corresponding to the apparatus, and a content metaphor corresponding to executable content in the discovered device, and the controller controls a device corresponding to the device metaphor to execute content corresponding to the content metaphor in response to movement of the content metaphor, selected by a detected touch, to the device metaphor.

### Advantageous Effects of Invention

According to an embodiment of the present invention, a device metaphor corresponding to a connectable device with an apparatus and a content metaphor corresponding to selected content is displayed on a first screen, and content corresponding to the content metaphor may be executed by a device corresponding to a device metaphor in response to movement of the selected content metaphor to a device metaphor.

When a device metaphor corresponding to a device and a content metaphor corresponding to executable content is displayed and the selected content metaphor is moved to a device metaphor, an executable device metaphor may display the moved content metaphor to be distinguished.

A target device may execute content corresponding to a content metaphor displayed although the user does not discover a device storing content to be played.

A device metaphor corresponding to a device and a content metaphor corresponding to executable content may be displayed on a first screen, and a device corresponding to a selected device metaphor may execute content while displaying an executable content list.

A second screen may display at least one of a device addition metaphor, a content addition metaphor, and an application addition metaphor after a first second displaying the device metaphor and a content metaphor.

### Brief Description of Drawings

The above and other aspects, features and advantages of the present invention will be more apparent from the following detailed description taken in conjunction with the accompanying drawings, in which:
FIG. 1 is a diagram illustrating an apparatus according to an embodiment of the present invention;
FIG. 2 is a block diagram illustrating a configuration of an apparatus according to an embodiment of the present invention;
FIG. 3 is a flowchart illustrating a method of playing content of an apparatus according to an embodiment of the present invention;
FIGs. 4 to 6 are diagrams illustrating a method of playing content of an apparatus according to an embodiment of the present invention;
FIG. 7 is a flowchart illustrating a method of playing content of an apparatus according to an embodiment of the present invention;
FIGS. 8A and 8B are diagrams illustrating a method of playing content of an apparatus according to an embodiment of the present invention;
FIG. 9 is a diagram illustrating a method of playing content of an apparatus according to an embodiment of the present invention;
FIG. 10 is a flowchart illustrating addition of a device addition metaphor, a content addition metaphor, and an application addition metaphor for playing content of an apparatus according to an embodiment of the present invention; and
FIGs. 11A to 11C are diagrams illustrating touch inputs corresponding to addition of a device addition metaphor, a content addition metaphor, and an application addition metaphor for playing content of an apparatus according to an embodiment of the present invention.

### Mode for the Invention

Various embodiments of the present invention are described as follows, with reference to the accompanying drawings. The same reference numbers are used throughout the drawings to refer to the same or like parts. Detailed descriptions of well-known functions and structures may be omitted to avoid obscuring the subject matter of the present invention.

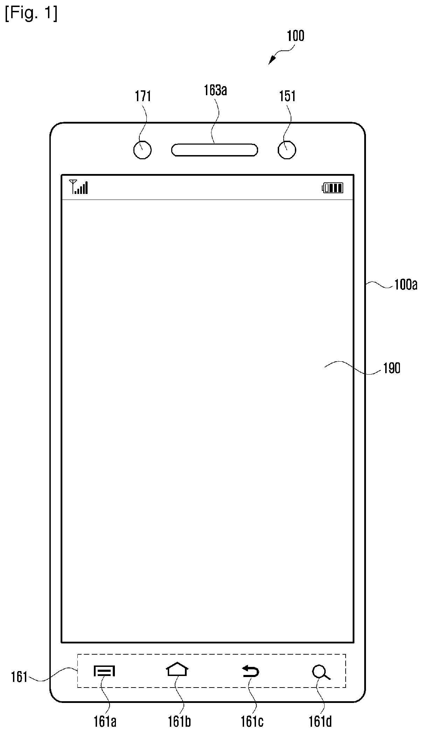

FIG. 1 is a diagram illustrating an apparatus according to an embodiment of the present invention.

Referring to Fig. 1, an apparatus 100 with one touch screen includes a housing 100a and further includes a first camera 151 photographing a still image or a moving image, a proximity sensor 171 detecting approach of a user or an object, and a first speaker 163a outputting a voice and/or sound to an exterior of the apparatus 100 are positioned at an upper front surface of the housing 100a. A touch screen 190 is positioned in a front center of the housing 100a, and a button group 61 including one button 161b or a plurality of buttons 161a to 161d is positioned in a lower front surface of the housing 100a. A second camera (not shown) photographing a still image or a moving image may be positioned at a rear surface of the housing 100a.

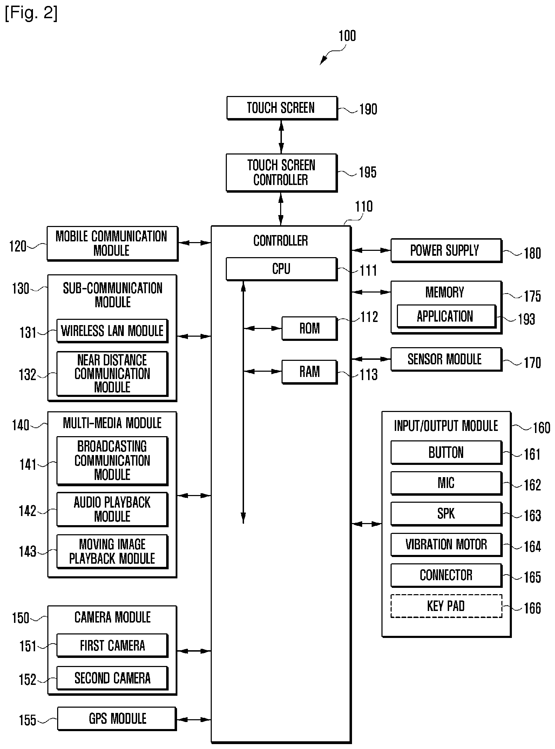

The apparatus 100 is not limited to the structural elements illustrated in FIG. 1, and at least one structural element corresponding to a performance of the apparatus 100 may be added (e.g., second speaker and the like) or omitted (e.g., button group). FIG. 2 is a block diagram illustrating a configuration of an apparatus according to an embodiment of the present invention.

Referring to FIG. 2, the apparatus 100 may connect to a device (not shown) using a mobile communication module 120, a sub-communication module 130, and a connector 165. The connectable "device" includes other devices such as a portable phone, a smart phone, a tablet PC, a television, a set-top box, a camera, a camcorder, a monitor, an image formation device (e.g., printer, copy machine, all-in one, facsimile, or the like), and a server. Referring to Fig. 2, the apparatus 100 includes a touch screen 190 and a touch screen controller 195. The apparatus 100 includes a controller 110, a mobile communication module 120, a sub-communication module 130, a multi-media module 140, a camera module 150, a Global Positioning System (GPS) module 155, an input/output module 160, a sensor module 170, a memory 175, and a power supply 180.

The sub-communication module 130 includes at least one of a wireless LAN module 131 and a near distance communication module 132, and the multi-media module 140 includes at least one of a broadcasting communication module 141, an audio playback module 142, and a moving image playback module 143. The camera module 150 includes at least one of the first camera 151 and the second camera 152, and the input/ output module 160 includes at least one of a button 161, a microphone 162, a speaker 163, a vibration motor 164, a connector 165, and a key pad 166.

The controller 110 may include a central processing unit (CPU) 111, a Read Only Memory (ROM) 112 storing a control program for controlling the apparatus 100, and a Random Access Memory (RAM) 113 storing signals or data input from an exterior of the apparatus 100 and used as a storage area for an operation performed by the apparatus 100. The CPU 111 may include a single core, a dual core, a triple core, or a quad core. The CPU 111, the ROM 112, and the RAM 113 may be connected to each other through an internal bus.

The controller 110 may control a mobile communication module 120, a sub-communication module 130, a multi-media module 140, a camera module 150, a GPS module 155, an input/output module 160, a sensor module 170, a memory 175, a power supply 180, a touch screen 190, and a touch screen controller 195. The apparatus 100 according to the embodiment of the present invention may control a DMS (including m-DMS), DMR, DMPr under the control of a controller 110 in a DLNA network system. Further, the apparatus 100 may act as a DMC (including m-DMC), a DMS (including m-DMS), or DMP (including m-DMP) under the control of the controller 110 in a DLNA system.

The mobile communication module 120 connects to other devices through one or a plurality of antennas (not shown). The mobile communication module 120 transmits/ receives voice call, image call, a wireless signal for Multi-Media Message (MMS) or Short Message Service (SMS) with a portable phone (not shown), a smart phone (not shown), and a tablet PC including a mobile communication module corresponding to an input phone number.

The sub-communication module 130 may include at least one of a wireless LAN module 131 and a near distance communication module 132. The sub-communication module 130 may include one or both of the wireless LAN module 131 and the near distance communication module 132.

The wireless LAN module 131 may connect to an Internet in a location in which an Access Point (AP) is installed under the control of the controller 110. The wireless LAN module 131 supports a wireless LAN protocol IEEE802.11x created and maintained by the Institute of Electrical and Electronics Engineers (IEEE). The near distance communication module 132 may perform near distance communication with the apparatus 100 and a device in a wireless scheme under the control of the controller 110. The near distance communication scheme may include a Bluetooth® communication scheme, an Infrared Data Association (IrDA) scheme, or the like. The apparatus 100 according to an embodiment of the present invention may share content stored in a device using a sub-communication module 130. The apparatus 100 may play content shared using the sub-communication module 130. Further, the apparatus 100 may share the content stored in the apparatus with a device using the sub-communication module 130. The apparatus 100 may control the content stored in the apparatus 100 to be played in a device (not shown). The apparatus 100 may control the content stored in a device to be played by another device using the sub-communication module 130. The playback of the content includes at least one of a find, send, store, get, play, and print operation.

A communication interface unit (not shown) of the apparatus 100 may include a mobile communication module 120, a wireless LAN module 131, and a near distance communication module 132. For example, the communication interface unit (not shown) may include a combination of the mobile communication module 120, a wireless LAN module 131, and a near distance communication module 132. The multi-media module 140 may include a broadcasting communication module 141, an audio playback module 142, and a moving image playback module 143. The broadcasting communication module 141 may receive a broadcasting signal (e.g., TV broadcasting signal, radio broadcasting signal, or data broadcasting signal), additional broadcasting information (e.g., Electric Program Guide (EPG), Electric Service Guide (ESG), or the like)) transmitted from a broadcasting system through a broadcasting communication antenna (not shown) under the control of the controller 110. The audio playback module 142 may play an audio file (e.g., files with file extensions such as mp3, wma, ogg, or wav) stored in a memory of received from a device under the control of the controller 110. The moving image playback module 143 may play a moving image file (e.g., files with file extensions such as mpeg, mpg, mp4, avi, mov, or mkv) stored in a memory or received from a device. The moving image playback module 143 may play a digital audio file. The multi-media module 140 according to an embodiment of the present invention may play streamed content (e.g., audio file or video file) through a sub-communication module 130.

The multi-media module 140 may include only an audio playback module 142 and a moving image playback module 143 except for a broadcasting communication module 141. The audio playback module 142 or the moving image playback module 143 of the multi-media module 140 may be included in the controller 110.

The camera module 150 may include at least one of a first camera 151 and a second camera 152 of a housing 100a photographing a still image or a moving image. The camera module 150 may include one or both of a first camera 151 and a second camera 152. Further, the first camera 151 or the second camera 152 may include an auxiliary light source (e.g., flash) providing light amount necessary for photographing. According to an embodiment of the present invention, the first camera 151 and the second camera 152 may be located adjacent to each other (e.g., a distance between the first camera 151 and the second camera 152 ranging from 1 cm to 8 cm), and photograph a three-dimensional still image or a three-dimensional moving image.

The GPS module 155 may receive an electric wave from a plurality of GPS satellites located on an earth orbit and calculate a location of the apparatus 100 using a wave arrival time from each of GPS satellites to the apparatus 100.

The input/output module 160 may include at least one of a plurality of buttons 161, a microphone 162, a speaker 163, a vibration motor 164, a connector 165, and a key pad 166.

The button 161 receives input of a user. The button 161 may include a button group 61 located at an lower front portion of the housing 100a, a power/lock button (not shown) located at an upper side of the housing 100a, and at least one volume button (not shown) located in a side of the housing 100a.

The button group 61 is formed in an upper front portion of the housing 100a, and includes a menu button 161a, a home button 161b, and a back button 161c. According to an embodiment of the present invention, the button group 61 may also include only the home button 161b and the touch screen 190 may also receive input of the user without the button group 61.

The microphone 162 receives a voice or a sound and generates an electric signal under the control of the controller 110. One or a plurality of microphones 162 may be located in the housing 100a.

The speaker 163 may output sounds corresponding to various signals (e.g., wireless signal, broadcasting signal, digital audio file, digital moving image file, or photographing, etc.) of a mobile communication module 120, a sub-communication module 130, a multi-media module 140, or a camera module 150. The speaker 163 may output a sound (e.g., button operation sound corresponding to input phone number) corresponding to a function performed by the apparatus 100. One or a plurality of speakers 163 are provided in the housing 100a. When plurality of speakers are located in the housing 100a, one sound (e.g., voice call) or a plurality of sounds (e.g., audio file in a stereo manner) may be output under the control of the controller 110.

The speaker 163 according to an embodiment of the present invention may output a sound corresponding to audible feedback to the user in response to reaching of the touched content metaphor to a target device metaphor.

The vibration motor 164 may convert an electric signal into mechanical vibration under the control of the controller 110. When call connection is received from another device (not shown), a vibration motor 164 of an apparatus 10 in a vibration mode operates. One or a plurality of vibration motors may be provided in the housing 100a.

The vibration motor 164 may output vibration corresponding to tactile feedback to the user in response to reaching of the touched content metaphor to a target device metaphor.

The connector 165 is an interface for connecting the apparatus 100 to a device (not shown) or a power source (not shown). The connector 165 may transmit data stored in a memory of the apparatus 100 to a device (not shown) through a wired cable connected to a cable 165 or receive data from a device (not shown). Power is input from a power source (not shown) through a wired cable connected to the cable 165 or may charge a battery (not shown).

The key pad 166 receives key input of a user. The key pad 166 may include at least one of a physical key pad (not shown) formed in the apparatus 100 or a virtual key pad (not shown) displayed on a touch screen 190. For example, the apparatus 100 may include one or both of the physical key pad (not shown) and the virtual key pad (not shown) according to its performance and structure.

A sensor module 170 includes a sensor for detecting a state of the apparatus 100, and generating and transmitting a signal corresponding to the detected state of the apparatus 100 to the controller 110.

The sensor module 170 may include at least one of a proximity sensor 171 detecting an approaching a body of a user or an object, an illumination sensor (not shown), and a motion sensor (not shown) detecting an operation of the apparatus 100 (rotation of the apparatus 100, acceleration or vibration applied to the apparatus 100). For example, the sensor module 170 may include a combination of the proximity sensor 171, the illumination sensor (not shown), and a motion sensor (not shown). Sensors included in the sensor module 170 may be added or excluded depending on the performance of the apparatus 100.

The memory 175 may store input/output signals or data corresponding to operations of the mobile communication module 120, the sub-communication module 130, the multi-media module 140, the camera module 150, the GPS module 155, the input/ output module 160, the sensor module 170, and the touch screen 190 under the control of the controller 110. The memory 175 may store a control program (e.g., Operation System (OS)) for controlling the apparatus 100 and the controller 110. The memory 175 stores respective messages received from an application 193 and a device, a device list corresponding to a discovered device and a content list corresponding to found content. The memory 175 stores a device metaphor corresponding to a searched device. Further, the memory 175 stores a content metaphor corresponding to found content.

The term "memory" includes a storage unit 175, a ROM 112 and a RAM 113 in the controller 110, or a memory card (not shown) (e.g., SD card, memory stick) which can be mounted in the apparatus 100. The storage unit may include a non-volatile memory, a volatile memory, a Hard Disc Driver (HDD), or a Solid State Driver (SDD).

The power supply 180 may charge a battery (not shown) located in a housing 100a under the control of the controller 110. The charged battery (not shown) supplies power to the apparatus 100. The power supply 180 may supply power input from an external power source (not shown) through a wired cable connected to the connector 165 under the control of the controller 110. Further, the power supply 180 may charge a battery (not shown) in a wireless scheme using a magnetic induction scheme or a magnetic resonance scheme.

The touch screen 190 may provide user interface corresponding to various service (e.g., voice/image call, data transmission, broadcasting reception, photographing) to the user. The touch screen 190 according to an embodiment of the present invention may display a home screen (e.g., device metaphor, content metaphor, application metaphor, and the like) provided from the application 193. The touch screen 190 may display a device list and a content list provided from the application 193.

The touch screen 190 transmits an analog signal corresponding to a touch input through the user interface to the touch screen controller 195. The touch screen 190 may receive at least one touch through a body (e.g., a finger such as a thumb) or a touchable object (e.g., stylus pen).

The touch screen 190 according to an embodiment of the present invention receives a touch input of a content metaphor, touch input of a device metaphor, and continuous motion input corresponding to reaching of the touched content metaphor to a target device metaphor. The touch screen 190 may transmit analog signals corresponding to touch of a content metaphor, touch of a device metaphor, and continuous motion corresponding to reaching of the touched content metaphor to a target device metaphor. The touch screen 190 according to an embodiment of the present invention may provide a visual effect corresponding to visual feedback to a user in response to reaching of a touched content metaphor to a target device metaphor.

The touch according to an embodiment of the present invention may include contact and non-contact between a touch screen 190 and a body of the user or a touchable object (e.g., a detectable distance between the touch screen 190 and a body of the user or a touchable object is less than or equal to 1 mm). The detectable distance in the touch screen 190 may be changed according to the performance and structure of the apparatus 100.

For example, the touch screen 190 may be implemented by a resistive type, a capacitive type, an infrared type or an acoustic wave type. Furthermore, the touch screen 190 may be implemented in other types to be developed or used in common.

The touch screen controller 195 converts an analog signal received from the touch screen 190 into a digital signal (e.g., X and Y position coordinates), and transmits the digital signal to the controller 110. The controller 110 may control the touch screen 190 using the digital signal received from the touch screen controller 195. The controller 110 may control such that a content metaphor and a device metaphor displayed on the touch screen 190 are selected, and content is played in a device corresponding to a target device metaphor in response to a continuous movement corresponding to a touch input on the touch screen 190 or reaching of a touched content metaphor to a target device metaphor. The touch screen controller 195 may be included in the controller 110.

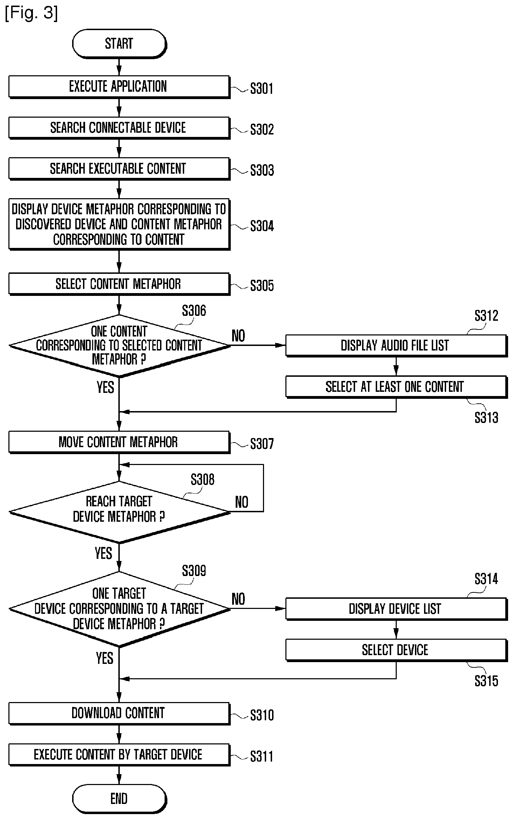

FIG. 3 is a flowchart illustrating a method of executing content of an apparatus according to an embodiment of the present invention.

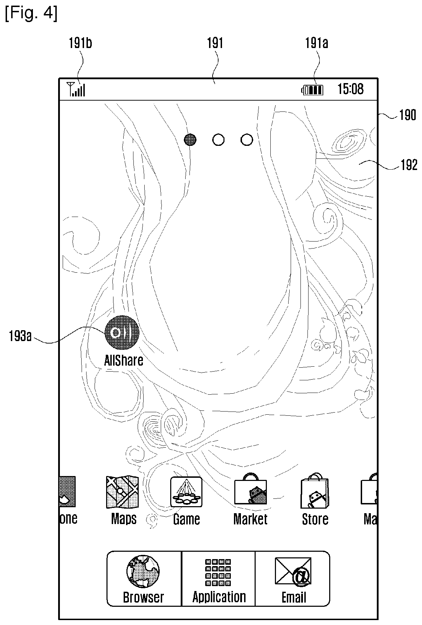

FIGs. 4 to 6 are diagrams illustrating a method of playing content of an apparatus according to an embodiment of the present invention.

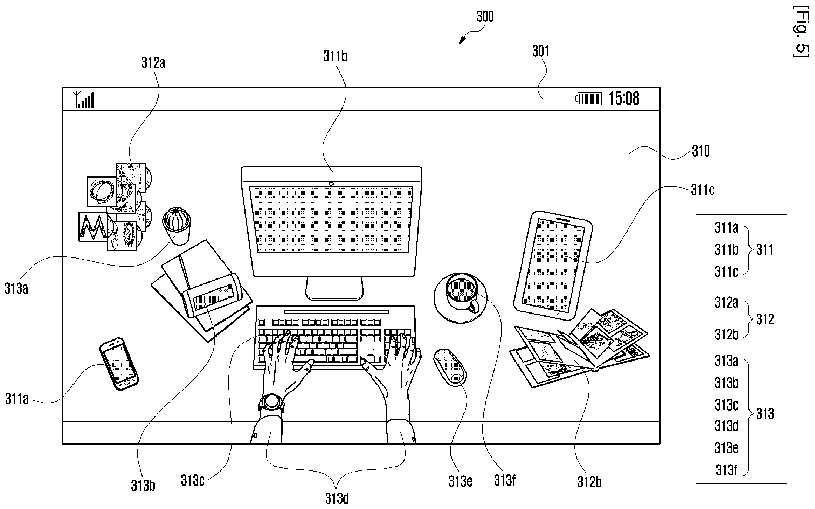

Referring to FIG. 4, a status bar 191 representing a state of an apparatus 100 such as a charge state 191a or strength 191b of a received signal and a ground screen 192 representing shortcut icons or menus are displayed on a touch screen 190. When a shortcut icon 193a of an application 193 displayed on the ground screen 192 is selected, the application 193 is executed. A home screen 300 (illustrated in FIG. 5) provided from the application 193 is displayed on the touch screen 190 by the application 193.

Referring to FIG. 3, a controller 110 executes an application, for example application 193, in Step 301. In Step 302, the controller 110 searches and discovers a connectable device.

When the application 193 is executed in the apparatus 100, a device is discovered using Simple Service Discovery Protocols (SSDP) through a sub-communication module 130 under control of the controller 110. The apparatus 100 multi-casts a discovery message of an SSDP using the sub-communication module 130, and receives a response message unicasted from the connectable device. Further, the apparatus 100 may receive an advertisement message of a device (not shown) added to a wired/ wireless network. The discovery message, the response message, and the advertisement message depend on an UPnP based message format. The apparatus 100 according to an embodiment of the present invention may search a device using an IP based network protocol as well as a DLNA. The received response message and advertisement message are stored in the memory under the control of the controller 110.

The controller 110 may request description to a device which transmits the received response message or advertisement message. The detailed information includes capability of the device and services which the device may provide.

The controller 110 may create a device list using stored response message, an advertisement message, and detailed information. Items of a device list stored in the memory may include a device name (e.g., model name), a type of device (e.g., smart phone, computer, television, etc.) or a connected state between the apparatus 100 and the device. The created device list may be stored in a look-up table of the memory of the apparatus 100. Items of the device list stored in the memory may be changed. Items (e.g., connected state of a device) of the device list may be updated according to a connected state between the apparatus 100 and the device in a wired/wireless network.

Referring to FIG. 3, the controller 110 searches and finds executable content in Step 303.

The controller 110 searches the executable content from the apparatus 100 or a searched device using the created device list. The controller 110 receives meta data corresponding to executable content through Browse/Search() action of Content Directory Service (CDS). The controller 110 may create a content list using received meta data. Further, the controller 110 searches executable content stored in a memory of the apparatus 100.

The term "content" refers to content which can be executed in the apparatus 100 or a device. The content includes audio files (e.g., music), moving image files (e.g., video), image files (e.g., photos), or e-book files (e.g., e-book). Playback of the content includes at least one of find, send, store, get, play, and output of executable content. The apparatus 100 and the device (not shown) may include a combination of find, send, store, get, play, and print. The content may be found in a DLNA network system.

The term "content list" includes a list of content stored in the apparatus 100 or a list of content stored in a device. The content list is stored in a memory of the apparatus 100. The content list may be stored in a look-up table of the memory in the apparatus 100. Items of a content list stored in the memory may include a device name (e.g., model name) storing content, types of content (e.g., music, video, photo, or e-book) and file names. The content list may include thumbnail images (e.g., album thumbnail image and the like) corresponding to types of content. Items of the content list stored in the memory may be changed. A content list stored in a memory corresponding to the apparatus 100 or a device on a network may be updated.

Referring to FIG. 3, the controller 110 displays a device metaphor corresponding to a discovered device and a content metaphor corresponding to content in Step 304.

Referring to FIG. 5, the home screen 300 includes a state bar 301 displaying a state of the apparatus 100 and a metaphor display area 310 located in a lower end of the state bar 301 and displaying a device metaphor 311 (311a to 311c) and a content metaphor 312 (312a and 321b). An application metaphor may be displayed on the metaphor display area 310.

The controller 110 maps a device metaphor 311 corresponding to a device using a device list stored in a memory. The mapped device metaphors 311a to 311c are displayed on the metaphor display area 310. The controller 110 maps a content metaphor 312 corresponding to content using a content list stored in the memory. The mapped content 312a and 312b are displayed on the metaphor display area 310.

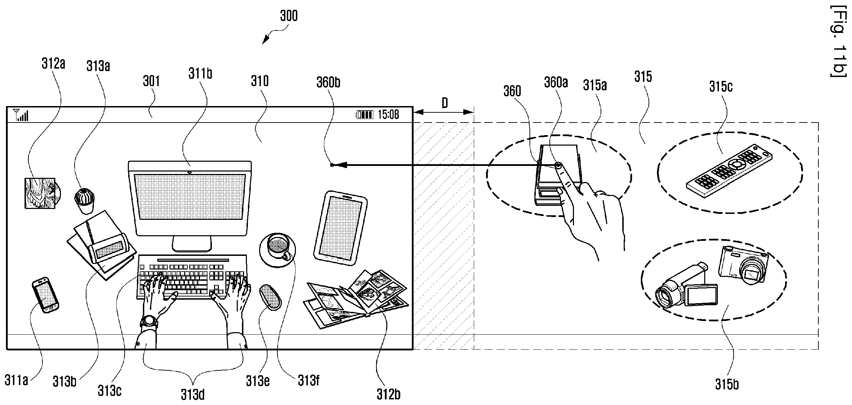

The memory may store a plurality of device metaphors corresponding to a type of device and a plurality of content metaphors corresponding to a type of content. The device metaphor 311 includes a mobile terminal metaphor 311a corresponding to a portable phone or a smart phone according to a type of device, a computer metaphor 311b corresponding to a computer or a server, a tablet metaphor 311c corresponding to a tablet PC, a TV metaphor (not shown) corresponding to a television, or a camera metaphor 325b (illustrated in FIG. 11B) corresponding to a camera or a camcorder. The device metaphor 311 displayed on the metaphor display area 310 may be added or removed according to environment setting of the application 193. The device metaphor 311 displayed on the metaphor display area 310 according to an embodiment of the present invention may be added or removed by a touch gesture.

The content metaphor 312 includes a music metaphor 312a corresponding to an audio file, a photo metaphor 312b corresponding to an image file, a video metaphor (not shown) corresponding to a moving image file, or an e-book metaphor (not shown) corresponding to an e-book file according to a type of content. The content metaphor 312 displayed on the metaphor display area 310 may be added or removed according to environment setting of an application. The content metaphor 312 displayed on the metaphor display area 310 according to an embodiment of the present invention may be added or removed according to a touch gesture.

The device metaphor 311 displayed on the metaphor display area 310 may be changed to another device metaphor (not shown) stored in the memory. For example, when the computer metaphor 311b displayed on the metaphor display area 310, is a metaphor of a model A, the metaphor may be changed to a model B instead of the model A. The metaphor display area 310 includes not only the device metaphor 311 and the content metaphor 312 but also fixed metaphors 313, 313a to 313f. A fixed metaphor 313 not corresponding to the discovered device or the found content is not executed by selection of the user. The fixed metaphor 313 may be changed in a location of the metaphor display area 310.

Information of the device metaphor 310 displayed on the metaphor display area 310 is stored in the memory. Stored information of the device metaphor 311 includes the size (e.g., (80pixel x 60pixel)) and a current location (e.g. (150, 550)). Information of the content metaphor 312 displayed on the metaphor display area 310 is stored in the memory. Stored information of the content metaphor 312 includes the size (e.g., 70pixel x 50pixel)) and a current location (e.g., (140, 300)). A device metaphor or a content metaphor may be selected by a touch input using information of the device metaphor 311 and information of the content metaphor 312 stored in the memory. Content corresponding to the selected content metaphor may be executed by a device corresponding to a device metaphor. A metaphor display area 310 of a home screen 300 according to an embodiment of the present invention is provided to a scene on an office desk. The metaphor display area 310 of a screen 300 may be changed to a scene in a sofa of a living room in a house or a screen in a parasol.

Referring to FIG. 3, the controller 110 selects a content metaphor in Step 305.

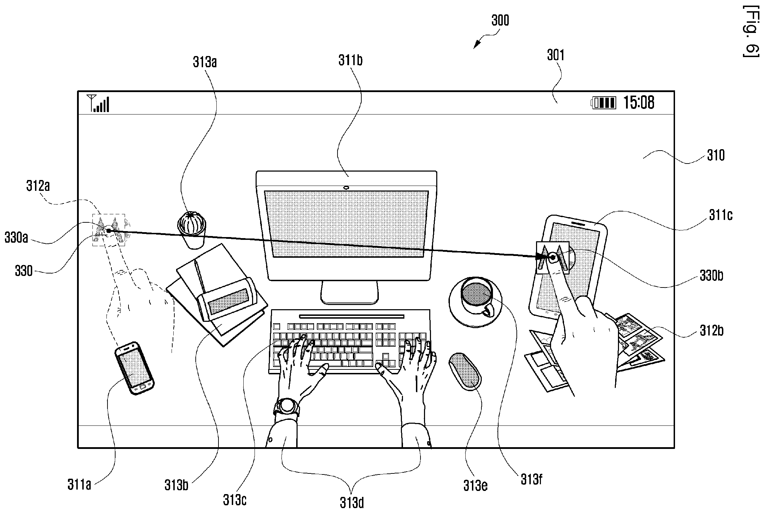

Referring to FIG. 6, a music metaphor 312a displayed on the metaphor display area 310 is selected by the user. The controller 110 may detect a touch 330 corresponding to selection of a music metaphor 312a using the touch screen 190 and the touch screen controller 195. The controller 110 may receive an initial location 330a (e.g., X and Y position coordinates) on the metaphor display area 310 from the touch screen controller 195. The controller 110 may compare an initial location 330a of the touch on the metaphor display area 310 with information of each content metaphor 312 stored in the memory. When the music metaphor 312a is selected according to the comparison result, it may be displayed to differentiate from another content metaphor 312 (e.g., an edge of the music metaphor 312a is emphasized or a background image of music metaphor 312a is transformed).

The controller 110 may store an initial location of touch, touched detection time, and information of the touched music metaphor 312a in the memory. A touch contacting the metaphor display area 310 may occur by a touch of one of fingers with thumb or a touchable object.

According to an embodiment of the present invention, the number of touches detected on the metaphor display area 310 is not limited to one, but a plurality of touches may be detected. When a plurality of touches are detected on the metaphor display area 310, the controller 110 may store a plurality of touched locations and a plurality of touched detection times in the memory.

Referring to FIG. 3, the controller 110 determines whether there is a single content corresponding to a selected content metaphor in Step 306.

The controller 110 determines the number of contents corresponding to a selected music metaphor 312a using a content list. The controller 110 counts the number of contents corresponding to a content type item in a content list stored in a memory. When there are a plurality of contents corresponding to the music metaphor 312a according to the counting result, the process proceeds to Step 312.

Referring to FIG. 3, the content metaphor is moved in Step 307.

Referring to FIG. 6, the controller 110 may detect movement of the selected music metaphor 312a using a touch screen 190 and a touch screen controller 195. The controller 110 may detect a continuous movement (e.g., a plurality of X and Y position coordinates corresponding to a continuous movement) from an initial location of the selected music metaphor 312a using the touch screen 190 and the touch screen controller 195. The detected continuous movement (e.g., a plurality of X and Y position coordinates from 330a to 330b) of the music metaphor 312a may be stored in the memory. The controller 110 may calculate moving duration time, moving distance, moving direction from an initial location to a current location using a plurality of X and Y position coordinates stored in the memory.

Referring to FIG. 6, movement of a selected music metaphor 312a includes drag and drop or flick during a touch gesture. The change of a touch gesture input may correspond to movement of the music metaphor 312a.

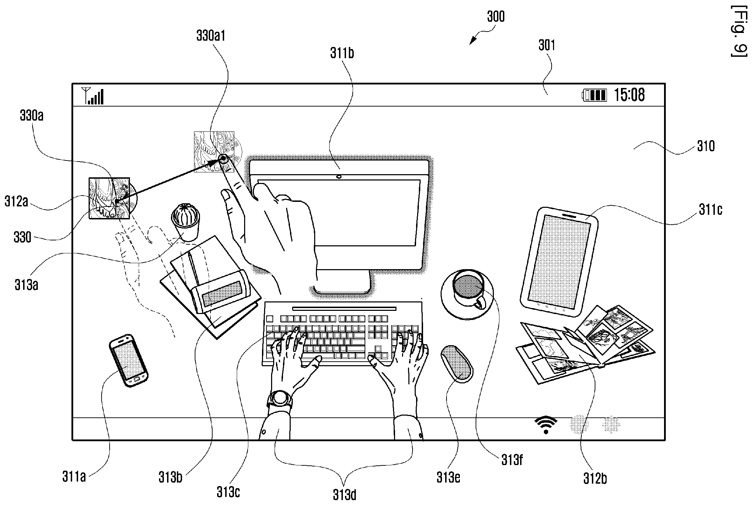

FIG. 9 is a diagram illustrating a method of playing content of an apparatus according to an embodiment of the present invention.

Referring to FIG. 9, the controller 110 may detect a continuous movement from an initial location of a selected music metaphor 312a using the touch screen 190 and the touch screen controller 195. The detected continuous movement of the music metaphor 312a (e.g., a plurality of X and Y position coordinates) may be stored in the memory. The controller 110 may display a device metaphor (e.g., computer metaphor 311b) capable of playing a moving music metaphor 312a distinguished from other device metaphors 311a and 311c of the metaphor display area 310.

The controller 110 may calculate a current location 330a1 of the music metaphor 312a and locations of respective device metaphor 311a to 311c. The controller 110 according to an embodiment of the present invention may visually distinguish a computer metaphor 311b nearest to a current location of a selected music metaphor 312a. Further, the controller 110 may visually distinguish various devices capable of playing the music metaphor 312a on the metaphor display area 310. Referring to FIG. 3, the controller 110 detects the reaching of a moved content metaphor to a target device metaphor in Step 308.

Referring to FIG. 6, the moved music metaphor 312a passes through a computer metaphor 311b being one of the device metaphors 311 and reaches a tablet metaphor 311c of a target device metaphor. The controller 110 may recognize a final location of the music metaphor 312a using the touch screen 190, the touch screen controller 195, and a memory. The controller 110 may recognize that the tablet metaphor 311c is a target device metaphor using information of the device metaphor 311 and the final location 330b of the music metaphor 312a. The final location 330b of the music metaphor 312a is a location which a touch of the touch gesture is touched-off from the touch screen 190. Reaching of the music metaphor 312a to the target device metaphor 311c is input to the controller 110 by executing an audio file corresponding to a music metaphor 312a reaching the tablet PC.

The controller 110 may provide feedback to a user in response to reaching of the content metaphor 312a to the target device metaphor 311c. The feedback may be provided by one of visual feedback, audible feedback, or tactile feedback. The controller 110 may provide a combination of the audible feedback, the visual feedback, or the tactile feedback to the user.

The visual feedback may be displayed on a home screen 300 as a visual effect (e.g., animation effect such as separate image or fade applied to a separate image) in response to reaching 303b of the content metaphor 312s to the target device metaphor 311c. The audible feedback may be output from a speaker 163 as a sound in response to reaching of the content metaphor 312a to the target device metaphor 311c. The tactile feedback may be output from a vibration motor 164 as vibration in response to reaching of the content metaphor 312a to the target device metaphor 311c. At least one feedback may maintain for a determined time (e.g., 500 msec).

The reaching of the selected music metaphor 312a to the target device metaphor 311c according to an embodiment of the present invention includes several types of selections. For example, the reaching selections may include selection of DMS (not shown) storing an audio file, selection of a DMR (e.g., tablet PC), and selection of a playback button (not shown) of the audio file.

Referring to Fig. 3, the controller 110 detects whether there is a single target device corresponding to a target device metaphor in Step 309.

The controller 110 determines the number of tablet PCs corresponding to a selected tablet metaphor 311c using a stored device list. The controller 110 counts the number of the tablet PCs corresponding to a device type item from a stored device list. When there are a plurality of tablet PCs corresponding to the tablet metaphor 311c according to the counting result, the process proceeds to Step 314 where the device list is displayed and in Step 315, a device is selected.

In Step 310, the controller 110 downloads content. Specifically, the controller 110 controls a tablet PC corresponding to a target device metaphor 311c to download an audio file corresponding to a music metaphor 312a. The controller 110 controls a DMS (not shown) and a tablet PC corresponding to execution of an audio file selected from the tablet PC. The controller 110 checks a list of protocols and a list of formats which a DMS (not shown) storing an audio file corresponding to a music metaphor 312a and a tablet PC (not shown) playing the audio file using GetProtocolInfo() action, and maps a resource, a protocol, and a format necessary for playing the audio file. The controller 110 exchanges an Instance ID for using AV Transport and Rendering Control Service (RCS) between the DMS (not shown) and the tablet PC (not shown) using PrepareFor-Connection() action. The controller 110 creates a session necessary for playing the audio file through exchange of the Instance ID, and obtains an ID corresponding to a session for managing the session. The RSC Instance ID is used to control a volume, a color, and brightness of a player. The controller 110 sets an URI corresponding to an audio file to a DMS (not shown) or the tablet PC (not shown) using SetAVTransportURI() action.

A tablet PC requests transmission of an audio file corresponding to an URI provided to a URI through SetAVTransportURI() to a DMS. When calling Play() action to the DMS (not shown), the DMS transmits an audio file to the tablet PC corresponding to URI set through SetAVTransportURI(). HTTP, RTP, or IEEE1394 is used as a protocol used in steaming of the audio file. Various actions for controlling playback such as Seek(), Stop(), Pause() during a streaming procedure of content may be called. Further, various actions of RSC relation of MR may be called to control a volume (e.g., SetVolume()), color, brightness, and the like of the tablet PC.

Reaching of a selected music metaphor 312a to the target includes three types of selection operations. For example, the reaching includes selection of a DMS (not shown) storing an audio file, selection of a DMS (e.g., tablet PC) playing the audio file, and selection of a playback button of the audio file. Selections (e.g., DMS selection, DMR selection, and playback button input) of the user may be reduced by a continuous operation (e.g., touch gesture) corresponding to reaching of the music metaphor 312a to the target device metaphor 311c.

Referring to Fig. 3, a target device executes content in Step 311.

The tablet PC plays an audio file received in one a push manner or a pull manner using Play() action. When playback of the audio file is terminated, the playback of the audio file may repeat. The controller 110 reports playback termination of the audio file to a DMS (not shown) and a tablet PC using TransferComplete() action. When receiving the TransferComplete() action, a DMS (not shown) and a tablet PC releases an allotted resource for playing the audio file.

When the tablet PC plays the audio file, the controller 110 may display a thumbnail image (e.g., using stored content list) executed in the target device on a target device metaphor 311c corresponding to a tablet PC. When playback of the audio file is terminated, an executing method of content by the apparatus is terminated.

When there are a plurality of content corresponding to the music metaphor 312a at Step 306 of FIG. 3, the processor proceeds to Step 312.

Referring to Fig. 3, the controller 110 displays a list of audio files corresponding to a music metaphor in Step 312.

The controller 110 may display an audio file list (not shown) of a stored content list in a side of a music metaphor 312a of the metaphor display area 310. The audio file list (not shown) may be displayed on a screen different from the home screen 300. The audio file list (not shown) may include a device name (e.g., model name) storing an audio file and an audio file name. The audio file of the audio file list (not shown) may be displayed distinguished by a device name (e.g., model name) storing the audio file. Further, the audio file list (not shown) may display only a thumbnail image corresponding to the audio file.

Referring to Fig. 3, the controller 110 selects at least one content in Step 313.

At least one audio file (e.g., one audio file or a plurality of audio files) is selected from a displayed audio file list (not shown) by the user. The controller 110 may detect a touch (not shown) corresponding to selection of at least one audio file from a displayed audio file list using the touch screen 190 and the touch screen controller 195.

The controller 110 may receive a location (e.g., X and Y position coordinates) on a metaphor display area 310 using the touch screen 190 and the touch screen controller 195. The controller 110 may compare a location (not shown) of the touch on the metaphor display region 310 with information (e.g., the size of a thumbnail image and a current location of the displayed audio file). When at least one audio file selected according to a comparison result is selected, it may be displayed distinguished (e.g., emphasizing an edge of a music file or changing a background image of music file) from other non-selected other audio files (not shown). When at least one music file is selected, the process proceeds to Step 307.

When there are a plurality of devices corresponding to a target device metaphor 311c at Step 309 of FIG. 3, the process proceeds to Step 314 and the controller 110 displays a device list corresponding to a target device metaphor.

The controller 110 may display a device list included in a device type item in a stored device list in a side of a target device metaphor 311c on a metaphor display region 310. The device list may be displayed on a screen other than the home screen 300. The device list displayed on the metaphor display area 310 may includes a device name (e.g., model name). Moreover, the device list may display only a thumbnail image corresponding to a device.

Referring to Fig. 3, the controller 110 selects a device in Step 315.

The device is selected from a displayed device list by the user. The controller 110 may detect a touch corresponding to selection of a device from the displayed device list using a touch screen 190 and a touch screen controller 195.

The controller 110 may receive a location (e.g., X and Y position coordinates) of a touch on a metaphor display area 310 using the touch screen 190 and the touch screen controller 195. The controller 110 may compare a location of a touch on the metaphor display area 310 with information (e.g., the size and a current location of a thumbnail image of a displayed image). A selected device according to a comparison result may be displayed distinguished (e.g., emphasizing edges of a device or changing a ground image of the device) from other non-selected devices (not shown). When the device is selected, the process proceeds to Step 310.

A method of playing content of an apparatus 110 according to an embodiment of the present invention corresponds to a 3-Box model of an UPnP AV architecture.

Reaching (e.g., when an apparatus 100 corresponding to a mobile terminal metaphor 311a is selected) in a mobile terminal metaphor 311a of a music metaphor 312a selected from a metaphor display area of the apparatus 100 may also be implemented corresponding to a 2-Box model of an UPnP AV architecture.

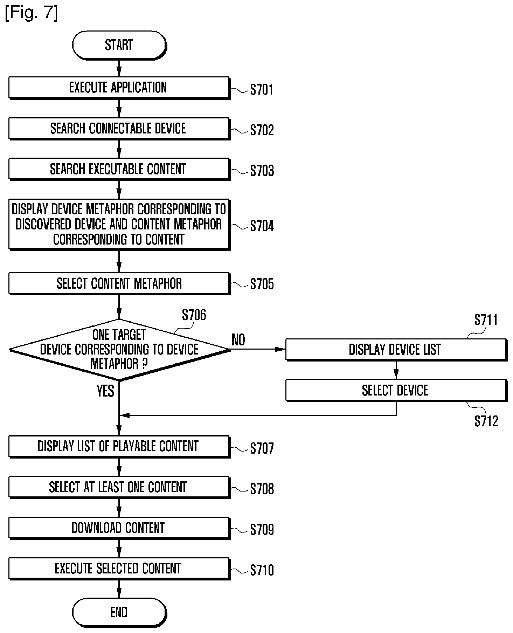

FIG. 7 is a flowchart illustrating a method of playing content of an apparatus according to an embodiment of the present invention.

Referring to FIG. 7, a controller 110 executes an application in Step 701. Referring to FIG. 4, when a shortcut icon 193a of an application 193 displayed on a ground screen 192 is selected, the application 193 is executed. Executing the application in Step 701 is substantially the same as executing the application in Step 301.

The apparatus 100 discovers a connectable device, in Step 702. When the application 193 is executed in the apparatus 100, a device is discovered using Simple Service Discovery Protocols (SSDP) through a sub-communication module 130 under a control of the controller 110. Because Step 702 of discovering the device is substantially the same as in Step 302, a repeated description is omitted.

The controller 110 finds executable content, in Step 703. Specifically, the controller 110 finds the executable content from the apparatus 100 or a searched device using the generated device list. The controller 110 receives meta data corresponding to the executable content through Browse/Search() action of Content Directory Service (CDS). The controller 110 finds content stored in a memory of the apparatus 100. Because Step 703 of finding the content is substantially the same as in Step 303, a repeated description is omitted.

The controller 110 displays a device metaphor corresponding to a searched device and a content metaphor corresponding to content, in Step 704.

The controller 110 maps a device metaphor 311 corresponding to a device using the device list stored in the memory. The mapped device metaphors 311a to 311c are displayed on the metaphor display area 310. The controller 110 maps a content metaphor 312 corresponding to content using a content list stored in the memory. The mapped content 312a and 312b are displayed on the metaphor display area 310. The application metaphor may be displayed on the metaphor display area 310. Displaying a device metaphor corresponding to a device and a content metaphor corresponding to content in Step 704 is substantially the same as in Step 304 of FIG. 3.

Referring to Fig. 7, the controller 110 selects a device metaphor, in Step 705.

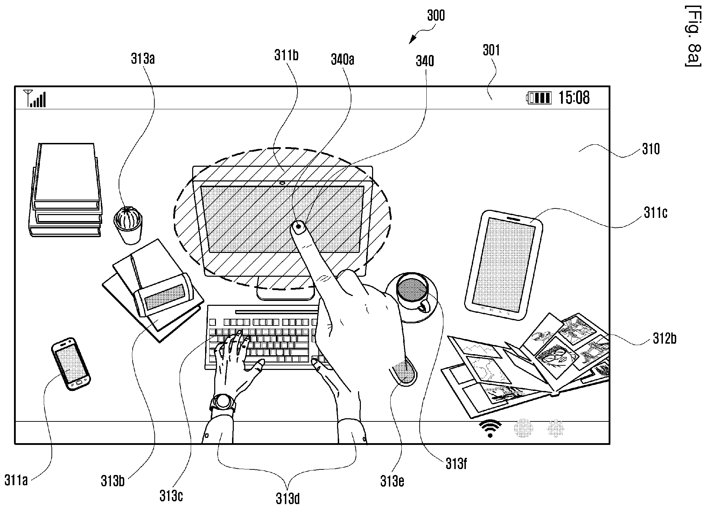

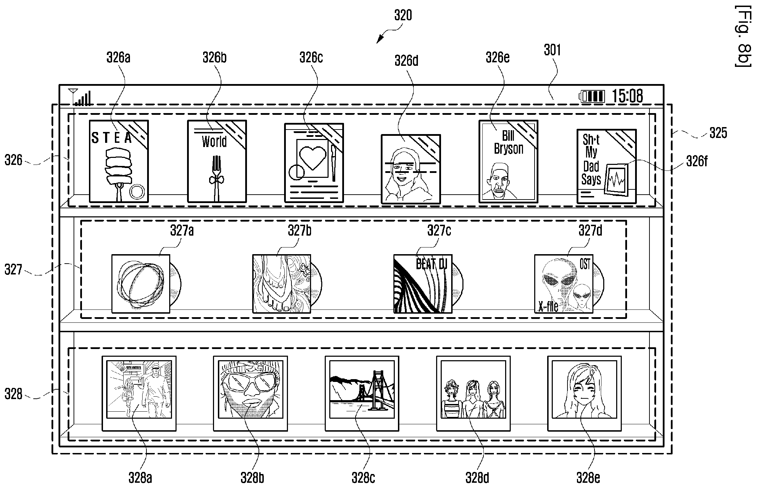

FIGS. 8A and 8B are diagrams illustrating a method of playing content of an apparatus according to an embodiment of the present invention.

Referring to FIG. 8A, a computer metaphor 311b displayed on the metaphor display area 310 is selected by the user. The controller 110 may detect a touch 340 corresponding to selection of a computer metaphor 311b using a touch screen 190 and a touch screen controller 195. Selecting a device metaphor in Step 705 is substantially the same as in Step 305 of FIG. 3, which one difference being that a device metaphor is selected in Step 705 of FIG. 7, whereas a content metaphor is selected in Step 305 of FIG. 3. The controller 110 determines whether there is single target device corresponding to the device metaphor, in Step 706.

The controller 110 determines the number of computers corresponding to a selected computer metaphor 311b using a device list stored in a memory. The controller 110 counts the number of computers corresponding to a device type item from the device list stored in the memory. When there are a plurality of computers corresponding to a computer metaphor 311b according to a counting result, the process proceeds to Step 711.

The controller 110 displays a list of playable content, in Step 707. The controller 110 finds executable content from an apparatus 100 or a device using a device list stored in a memory. The controller 110 receives meta data corresponding to at least one content through Browse/Search() of Content Directory Service (CDS).

The controller 110 finds content stored in the memory of the apparatus 100. The controller 110 may create a content list using received meta data and a content finding result stored in the memory. The created content list is displayed on a content list screen 320.

Referring to FIG. 8B, a content list screen 320 is displayed. The content list screen 320 includes a status bar displaying a state of the apparatus 100, and a content list display area, 325 located at a lower end of the status bar 301 and displaying content lists 326 to 328. An e-book area 326, a music area 327, and a photo region 328 are displayed on the content list display area 325. The e-book area 326 includes e-book files 326a through 326f stored in the apparatus 100 or a DMS. The music area 327 includes audio files 327a through 327d stored in the apparatus 100 or the DMS, and the photo area 328 includes image files 328a through 328e stored in the apparatus 100 or the DMS. A video area (not shown) may be displayed on the content list display area 325. When the e-book area 326 is touched and flicked left or right, and another e-book file not displayed on the e-book area 326 may be displayed. When the music area 327 is touched and flicked left or right by the user, another audio file not displayed on the audio area 327 may be displayed. When the photo area 328 is touched and flicked left or right, other image files not displayed on the photo area 328 may be displayed. Further, when a content list display area 325 is touched and left or right by the user, a video area (not shown) not displayed on the content list display area 325 may be displayed.

Moreover, a thumbnail image corresponding to content is displayed on the content list display are 325 but a text (e.g., file name) corresponding to content may be displayed.

At least one content is selected, in Step 708.

Referring to FIG. 8B, an audio file 327a displayed on the content list display area 325 may be selected. The controller 110 may detect a touch 341 corresponding to selection of an audio file 327a using the touch screen 190 and a touch screen controller 195.

Selecting at least one content is substantially the same in Step 708 as in Step 313 of FIG. 3.

The controller 110 downloads the selected content, in Step 709.

The controller 110 controls a DMS storing the audio file 327a to download an audio file corresponding to the audio file 327a selected from the content list display area 325. Downloading the selected content in Step 709 is substantially the same as in Step 310 of FIG. 3.

Selection of the selected audio file 327a and selection of a DMS (not shown) storing an audio file according to an embodiment of the present invention include two selections. For example, the two selections include selection of a DMR (e.g., computer) playing an audio file and selection of a playback button (not shown) for the audio file. Selections (e.g., DMS selection, DMR selection, and playback button input) of the user may be reduced by the selection of the target device metaphor 311b and the selection of the audio file 327a.

The controller 110 executes the selected content, in Step 710.

The computer (e.g., display unit such as monitor) plays the streamed audio file 327a in real time. Executing the selected content in Step 710 is substantially the same as in Step 311 of FIG. 3 with one difference being that the computer executes the audio file at Step 710 of FIG. 7, and a tablet PC executes the audio file at Step 311 of FIG. 3.

When playback of the audio file is terminated, a method of playing content of the apparatus is also terminated.

Referring back to Step 706 of FIG. 7, when there are a plurality of target devices corresponding to a device metaphor, the process proceeds to Step 711.

The controller 110 displays a device list in Step 711, and displaying the device list in Step 711 is substantially the same as in Step 314 of FIG. 3.

The controller 110 selects a device in Step 712, and selecting the device in Step 712 is substantially the same as in Step 315 of FIG. 3. When the device is selected, the process proceeds to Step 707.

A method of playing content of an apparatus 100 according to an embodiment of the present invention corresponds to a 3-Box model of UPnP AV architecture.

Selection of a mobile terminal metaphor 311a (e.g., when an apparatus 100 corresponding a mobile terminal metaphor 311a is selected) and selection of an audio file 327a from the metaphor display area 310 of the apparatus 100 may be changed corresponding to a 2-Box model of UPnP AV architecture.

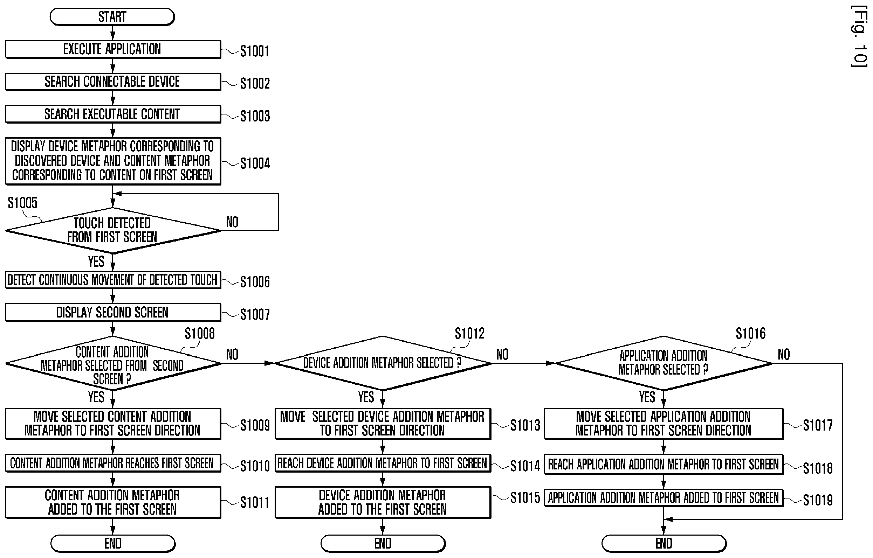

FIG. 10 is a flowchart illustrating addition of a device addition metaphor, a content addition metaphor, and an application addition metaphor for playing content of an apparatus according to an embodiment of the present invention.

Step 1001 of playing an application through Step 1004 of displaying a device metaphor corresponding to a discovered device and a contents metaphor corresponding to contents is substantially the same as in Steps 301 through 304 of FIG. 3.

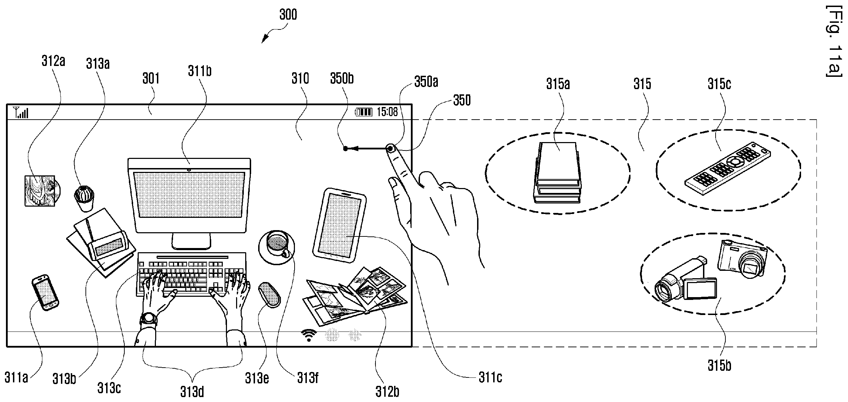

FIGs. 11A to 11C are diagrams illustrating addition of a device addition metaphor, a content addition metaphor, and an application addition metaphor for playing content of an apparatus according to an embodiment of the present invention.

Referring to FIG. 11A, a first screen is a home screen 300 , in Step 1004.

A touch is detected from the first screen , in Step 1005.

Referring to FIG. 11A, a touch 350 is detected from the first screen 300 by the user.

The controller 110 may detect a touch 350 using a touch screen 190 and a touch screen controller 195. The controller 110 may receive an initial location 350a (e.g., X and Y position coordinates) on a first screen 300 corresponding to a touch 350 from the touch screen controller 195. The controller 110 may store the initial location 350a of a touch on the first screen 300 and a detected touch time. For example, the touch 350 touched on the first screen 300 may occur by one of fingers with a thumb or a touchable object. Touch 350 touched on the first screen 300 is detected from a region without a device metaphor 311, a content metaphor 312, and a fixed metaphor 313.

A continuous movement of a detected touch is detected , in Step 1006.

Referring to FIG. 11A, the controller 110 may detect a movement of the detected touch using the touch screen 190 and the touch screen controller 195. The controller 110 may detect a continuous movement (a plurality of X and Y position coordinates corresponding to movement from 350a to 350b) from an initial location 350a of the touch 350. A plurality of X and Y position coordinates corresponding to the movement of the detected touch 350 from 350a to 350b. The controller 110 may calculate a moving duration time, a moving distance, and a moving direction from an initial location to a current location using a plurality of X and Y stored in the memory.

Referring to FIG. 11A, movement of the touch 350 includes a drag input and drag input with a touch gesture input and a change in a gesture corresponds to movement of the touch 350.

In Step 1005, a second screen is displayed.

Referring to FIG. 11A, when a continuous movement exceeds a determined distance (e.g., 15 mm from an initial location of touch), the controller 110 displays a second screen 315. The controller 110 may calculate a moving distance using a plurality of X and Y position coordinates corresponding to a continuous movement of a touch stored in a memory. The determined distance may be changed through environment setting. A final location 350b of the touch 350 is a location separated from the first screen 300.

When a distance between an initial location 350a of the touch to a final location 350b exceeds a determined distance, the controller 110 displays a second screen 315. At least one of a content addition metaphor 315a, a device addition metaphor 315b, and an application addition metaphor 315c may be displayed on the second screen 315.

Combinations of the content addition metaphor 315a, the device addition metaphor 315b, and the application addition metaphor 315c may be displayed. The content addition metaphor 315a includes a content metaphor (e.g., e-book file or moving image file) not displayed on the first screen 300. The device addition metaphor 315b includes a device metaphor (e.g., TV metaphor or camera metaphor) not displayed on the first screen 300. A remote controller metaphor or an apparatus 100 corresponding to a remote controller application capable of remotely controlling a telephone is positioned in a preset location, the application addition metaphor 315c includes a location detection corresponding to a zone detection application playing a task (e.g., auto backup) set to the apparatus 100.

The content addition metaphor is selected from a second screen 315, in Step 1008.

Referring to FIG. 11B, an e-book metaphor 315a displayed on the second screen 315 is selected by the user. The controller 110 may detect a touch 360 corresponding to selection of the e-book metaphor 315a using a touch screen 190 and a touch screen controller 195. The controller 110 may receive an initial location 360a (e.g., X and Y position coordinates) on a second screen 315 form the touch screen 190 and the touch screen controller 195. The controller 110 may compare an initial location 360a of a touch on the second screen 315 with information of each content metaphor 313 stored in the memory. When the e-book metaphor 315a is selected according to a comparison result, it may be displayed distinguished from other addition metaphors 315b and 315c (e.g., emphasizing edges of the e-book metaphor 315a or changing a ground image of the e-book metaphor 315a).

The controller 110 may store an initial location 360a of a touch, touch detection time, and information of touched e-book metaphor 315a. When the content addition metaphor is not selected from the second screen 315, the process proceeds to Step 1012. The selected content addition metaphor is moved to a first screen direction , in Step 1009.

Referring to FIG. 11B, the user moves the selected e-book metaphor 315a to a direction of the first screen 300. The controller 110 may detect movement of a selected e-book metaphor 315a using a touch screen 190 and the touch screen controller 195.

The controller 110 may detect a continuous movement (e.g., a plurality of X and Y position coordinates corresponding to movement from 360a to 360b) from an initial location 360a of a selected e-book metaphor 315a using a touch screen 190 and the touch screen controller 195. A plurality of X and Y position coordinates corresponding to movement from 360a to 360b may be stored in the memory. The controller 110 may calculate a moving duration time, a moving distance, and a moving direction from an initial location to a current location on a moving path using a plurality of X and Y position coordinates.

Referring to FIG. 11B, movement of the touch 360 includes drag and drop and flick among touch gestures. A change in a touch gesture input may correspond to movement of the touch 360.

A content addition metaphor reaches the first screen, in Step 1010. As illustrated in Fig. 11B, the e-book metaphor 315a reaches the first screen 300. When an e-book metaphor 315a moving to the second screen 315 reaches an area 20 mm spaced apart from a corner of one side of the second screen 315, a second screen 315 displayed is changed to a first screen 300. An e-book metaphor 315a moving on the first changed screen 300 reaches a final location 360b by the user. The controller 110 may know a final location 360b of an e-book metaphor 315a using a touch screen 190, a touch screen controller 195, and a memory. The final location 360b of the e-book metaphor 315a is a location separated from the first screen 300.

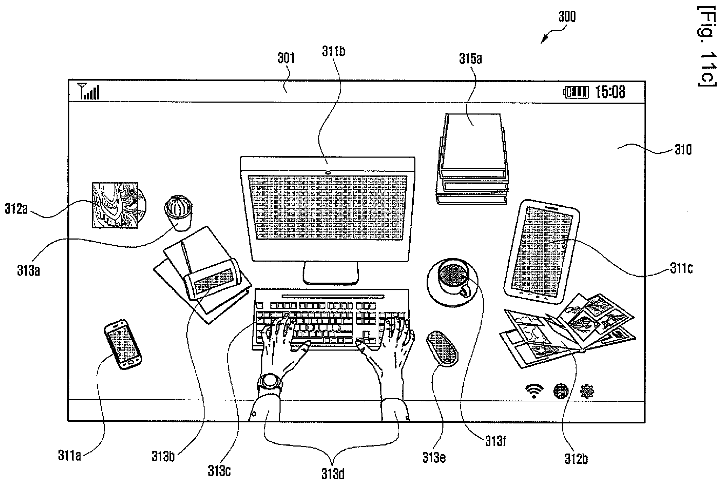

A content addition metaphor is added to the first screen, in Step 1011. As illustrated in FIG. 11C, an e-book metaphor 315a is added to the first screen 300. The controller 110 adds the e-book metaphor 315a to the first screen 300 using the touch screen 190, the touch screen controller 195, and a final location 360b of an e-book metaphor 315a stored in the memory. When the e-book metaphor 315a is added to the first screen 300, addition of an additional metaphor for a method of playing content of an apparatus is terminated.

Referring back to Step 1008 of Fig. 10, when a content addition metaphor is not selected on the second screen, the process proceeds to Step 1012.

A device addition metaphor is selected, in Step 1012. As illustrated in FIG. 11B, a camera metaphor 315b displayed on the second screen 315 may be selected by the user.

Selecting the camera metaphor 315b in Step 1012 is substantially the same as in Step 1008 of FIG. 10 with one difference being that a device addition metaphor is selected in Step 1012, and a contention addition metaphor is selected in Step 1008. When the device addition metaphor is not selected from the second screen, the process proceeds to Step 1016.

Step 1013 of moving a selected device addition metaphor to a first screen direction through Step 1015 of adding a device metaphor to a first screen are substantially the same as Steps 1009 through 1011 of FIG. 10.

A camera metaphor 315b, not the e-book metaphor 315a may be added to the first screen 300 in Step 1015. When the camera metaphor 315b is added to the first screen 300, addition of an additional metaphor for a method of playing content of an apparatus is terminated.

When the device addition metaphor is not selected from the second screen at Step 1012 of FIG. 10, the process proceeds to Step 1016.

An application addition metaphor is selected , in Step 1016. Referring to FIG. 11B, a remote controller metaphor 315c displayed on the second screen 315 may be selected by the user. Step 1016 of selecting the remote controller metaphor 315c is substantially the same as Step 1008 of FIG. 10 with one difference being that an application addition metaphor is selected in Step 1016, and a content addition metaphor is selected in Step 1008.

Step 1017 of moving a selected application addition metaphor to a first screen direction through Step 1019 of adding an application metaphor to a first screen are substantially the same as Steps 1009 through 1011 of FIG. 10. A remote controller metaphor 315c not an e-book metaphor 315a may be added to the first screen, in Step 1019. When the remote controller metaphor 315c is added to the first screen 300, addition of the additional content for a method of playing content of an apparatus is terminated.

According to an embodiment of the present invention, addition metaphors 315a to 315c may be added to a first screen 300 of an apparatus 100. At least one is selected from a device metaphor, a content metaphor, and application metaphor displayed on the first screen 300 and the selected metaphor is dragged in a second screen 315. When the selected metaphor exceeds a distance (e.g., 10 mm) determined from an edge of the first screen 300, the second screen 315 may be displayed. When a metaphor (not shown) selected on the second displayed screen 315, a drag selected from the first screen 300 may be eliminated.

The foregoing methods may be implemented in an executable program command form by various computer means and be recorded in a computer readable recording medium. The computer readable recording medium may include a program command, a data file, and a data structure or a combination thereof. The program command recorded in a recording medium may be customized for the present invention.

Although various embodiments of the present invention have been described in detail herein, many variations and modifications may be made without departing from the scope of the present invention, as defined by the appended claims.

## Claims

1. A method of executing content of a wired/wireless network-connectable device (311), the method comprising:
discovering, by an apparatus (100), a network-connectable device through the wired/wireless network using an application provided in the apparatus (100);
finding, by the apparatus (100), executable content from the discovered network-connectable device;
displaying a content metaphor (312) corresponding to the found executable content on a first screen (300) of the apparatus (100);
displaying a device metaphor (311) corresponding to the discovered network-connectable device on the first screen (300) of the apparatus (100); and
executing the found executable content through the discovered network-connectable device, wherein executing the found executable content comprises:
detecting a touch input on the content metaphor (312) displayed on the first screen (300);
detecting a reaching of the touched content metaphor (312) to the device metaphor (311); and
executing the found executable content corresponding to the content metaphor (312) by the discovered network-connectable device corresponding to the device metaphor (311), in response to the detected reaching.

2. The method of claim 1, wherein detecting reaching of the touched content metaphor (312) to the device metaphor (311) comprises detecting that the touched content metaphor (312) is moved to the device metaphor (311) by a touch gesture input.

3. The method of claim 1, wherein when detecting the touch input on the content metaphor (312), displaying a content list corresponding to the touched content metaphor (312).

4. The method of claim 1, further comprising:
detecting a touch input on the device metaphor (311) displayed on the first screen (300); and
displaying a content list to be executed by the discovered network-connectable device corresponding to the touched device metaphor (311).

5. The method of claim 1, wherein detecting reaching of the touched content metaphor (312) to the device metaphor (311) comprises:
visually distinguishing the device metaphor (311) according to whether content corresponding to the touched content metaphor (312) may be executed by the discovered connectable device corresponding to the device metaphor (311); and
displaying, when a plurality of devices corresponding to the device metaphor (311) exist, a device list corresponding to the plurality of devices.

6. The method of claim 1, wherein executing the content corresponding to the content metaphor (312) comprises:
downloading the content from another device into the discovered network-connectable device corresponding to the device metaphor (311) or requesting and downloading the content to the another device by the discovered network-connectable device corresponding to the device metaphor (311); and
executing the downloaded content by the discovered network-connectable device corresponding to the device metaphor (311).

7. The method of claim 1, wherein executing the content corresponding to the content metaphor (312) comprises:
downloading the content from another device storing the content; and
executing the downloaded content, by the discovered network-connectable device.

8. The method of claim 1, wherein the wired/wireless network supports Digital Living Network Alliance (DLNA), and the discovered network-connectable device is included in the DLNA class.

9. The method of claim 1, further comprising displaying after a touch gesture input, a second screen (315) displayed after the first screen (300), including at least one metaphor supported by the apparatus (100).

10. The method of claim 9, further comprising:
selecting a metaphor displayed on the second screen (315), wherein the metaphor is selected as a content addition metaphor (315a), a device addition metaphor (315b), and an application addition metaphor (315c) and
displaying the selected metaphor on the first screen.

11. A wired/wireless network-connectable apparatus (100) comprising:
a touch screen (190) displaying a first screen (300);
a communication interface unit (130) connectable with a wired/wireless network; and
a controller (110) configured to control the touch screen (190) and the communication interface unit (130),
wherein the controller (110) is configured to:
control the touch screen (190) to display a device discovered by the communication interface unit (130), a device metaphor (311) corresponding to the the discovered device, and a content metaphor (312) corresponding to executable content found in the discovered device, and
control the discovered device corresponding to the device metaphor (311) to execute the executable content corresponding to the content metaphor (312) in response to movement of the content metaphor (312), selected by a detected touch input, to the device metaphor (311).

12. The apparatus (100) of claim 11, wherein the controller (110) is configured to display a content list corresponding to the content metaphor (312), when a touch gesture input is detected on the content metaphor (312) displayed on the first screen (300) of the touch screen (190).

13. The apparatus (100) of claim 11, wherein the controller (110) is configured to display an executable content list in the discovered device corresponding to the device metaphor (311), when a touch gesture input is detected on the device metaphor (311) displayed on the first screen (300) of the touch screen (190).

14. The apparatus (100) of claim 11, wherein the controller (110) is configured to display a second screen (315) provided after the first screen (300) and including an addition metaphor corresponding to at least one of a content addition metaphor (315a), a device addition metaphor (315b), and an application addition metaphor (315c), when a touch gesture input is detected on the first screen (300) of the touch screen (190).

## Patentansprüche

1. Verfahren zum Ausführen von Inhalt einer drahtgebundenen/drahtlosen vernetzbaren Vorrichtung (311), wobei das Verfahren aufweist:
ein Entdecken, durch eine Vorrichtung (100), von einer vernetzbaren Vorrichtung durch das drahtgebundene/drahtlose Netzwerk unter Verwendung einer Anwendung, die in der Vorrichtung (100) bereitgestellt wird;
ein Suchen, durch die Vorrichtung (100), von ausführbarem Inhalt aus der entdeckten vernetzbaren Vorrichtung;
ein Anzeigen eines Inhaltsbilds (312), das dem gefundenen ausführbaren Inhalt auf einem ersten Bildschirm (300) der Vorrichtung (100) entspricht;
ein Anzeigen eines Vorrichtungsbilds (311), das der entdeckten vernetzbaren Vorrichtung auf dem ersten Bildschirm (300) der Vorrichtung (100) entspricht; und
ein Ausführen des gefundenen ausführbaren Inhalts durch die entdeckte vernetzbare Vorrichtung, wobei das Ausführen des gefundenen ausführbaren Inhalts aufweist:
ein Erkennen einer Berührungseingabe auf dem Inhaltsbild (312), das auf dem ersten Bildschirm (300) angezeigt wird;
ein Erkennen eines Heranreichens des berührten Inhaltsbilds (312) an das Vorrichtungsbild (311); und
ein Ausführen des gefundenen ausführbaren Inhalts, der dem Inhaltsbild (312) entspricht, durch die entdeckte vernetzbare Vorrichtung, die dem Vorrichtungsbild (311) entspricht, in Reaktion auf das erkannte Heranreichen.

2. Verfahren nach Anspruch 1, wobei ein Erkennen eines Heranreichens des berührten Inhaltsbilds (312) an das Vorrichtungsbild (311) ein Erkennen aufweist, dass das berührte Inhaltsbild (312) durch eine Berührungsgesteneingabe zu dem Vorrichtungsbild (311) verschoben wird.

3. Verfahren nach Anspruch 1, wobei, wenn die Berührungseingabe auf dem Inhaltsbild (312) erkannt wird, eine Inhaltsliste angezeigt wird, die dem berührten Inhaltsbild (312) entspricht.

4. Verfahren nach Anspruch 1, ferner aufweisend:
ein Erkennen einer Berührungseingabe auf dem Vorrichtungsbild (311), das auf dem ersten Bildschirm (300) angezeigt wird; und
ein Anzeigen einer Inhaltsliste, die durch die entdeckte vernetzbare Vorrichtung auszuführen ist, die dem berührten Vorrichtungsbild (311) entspricht.

5. Verfahren nach Anspruch 1, wobei ein Erkennen eines Heranreichens des berührten Inhaltsbilds (312) an das Vorrichtungsbild (311) aufweist:
ein visuelles Unterscheiden des Vorrichtungsbilds (311) gemäß dem, ob Inhalt, der dem berührten Inhaltsbild (312) entspricht, durch die entdeckte verbindbare Vorrichtung ausgeführt werden kann, die dem Vorrichtungsbild (311) entspricht; und
ein Anzeigen, wenn eine Mehrzahl von Vorrichtungen vorhanden ist, die dem Vorrichtungsbild (311) entsprechen, von einer Vorrichtungsliste, die der Mehrzahl von Vorrichtungen entspricht.

6. Verfahren nach Anspruch 1, wobei ein Ausführen des Inhalts, der dem Inhaltsbild (312) entspricht, aufweist:
ein Herunterladen des Inhalts von einer anderen Vorrichtung in die entdeckte vernetzbare Vorrichtung, die dem Vorrichtungsbild (311) entspricht, oder ein Anfordern und ein Herunterladen des Inhalts in die andere Vorrichtung durch die entdeckte vernetzbare Vorrichtung, die dem Vorrichtungsbild (311) entspricht; und ein Ausführen des heruntergeladenen Inhalts durch die entdeckte vernetzbare Vorrichtung, die dem Vorrichtungsbild (311) entspricht.

7. Verfahren nach Anspruch 1, wobei ein Ausführen des Inhalts, der dem Inhaltsbild (312) entspricht, aufweist:
ein Herunterladen des Inhalts von einer anderen Vorrichtung, die den Inhalt speichert; und
ein Ausführen des heruntergeladenen Inhalts durch die entdeckte vernetzbare Vorrichtung.

8. Verfahren nach Anspruch 1, wobei das drahtgebundene/drahtlose Netzwerk Digital Living Network Alliance (DLNA) unterstützt, und die entdeckte vernetzbare Vorrichtung in der DLNA-Klasse enthalten ist.

9. Verfahren nach Anspruch 1, ferner aufweisend, nach einer Berührungsgesteneingabe, ein Anzeigen eines zweiten Bildschirms (315), der nach dem ersten Bildschirm (300) angezeigt wird, der mindestens ein Bild enthält, das von der Vorrichtung (100) unterstützt wird.

10. Verfahren nach Anspruch 9, ferner aufweisend:
ein Auswählen eines auf dem zweiten Bildschirm (315) angezeigten Bilds, wobei das Bild als ein Inhaltszusatzbild (315a), ein Vorrichtungszusatzbild (315b) und ein Anwendungszusatzbild (315c) ausgewählt wird, und
ein Anzeigen des ausgewählten Bilds auf dem ersten Bildschirm.

11. Drahtgebundene/drahtlose vernetzbare Vorrichtung (100), aufweisend:
einen Berührungsbildschirm (190), der einen ersten Bildschirm (300) anzeigt;
eine Kommunikationsschnittstelleneinheit (130), die mit einem drahtgebundenen/drahtlosen Netzwerk verbindbar ist, und
einen Controller (110), der konfiguriert ist, um den Berührungsbildschirm (190) und die Kommunikationsschnittstelleneinheit (130) zu steuern,
wobei der Controller (110) konfiguriert ist zum:
Steuern des Berührungsbildschirm (190) zum Anzeigen einer Vorrichtung, die von der Kommunikationsschnittstelleneinheit (130) entdeckt wurde, eines Vorrichtungsbilds (311), das der entdeckten Vorrichtung entspricht, und eines Inhaltsbilds (312), das dem ausführbaren Inhalt entspricht, der in der entdeckten Vorrichtung gefunden wurde, und
Steuern der entdeckten Vorrichtung, die dem Vorrichtungsbild (311) entspricht, zum Ausführen des ausführbaren Inhalts, der dem Inhaltsbild (312) entspricht, in Reaktion auf eine Verschiebung des Inhaltsbilds (312), das durch eine erkannte Berührungseingabe ausgewählt wurde, zu dem Vorrichtungsbild (311).

12. Vorrichtung (100) nach Anspruch 11, wobei der Controller (110) so konfiguriert ist, dass er eine Inhaltsliste anzeigt, die dem Inhaltsbild (312) entspricht, wenn eine Berührungsgesteneingabe auf dem Inhaltsbild (312) erkannt wird, das auf dem ersten Bildschirm (300) des Berührungsbildschirms (190) angezeigt wird.

13. Vorrichtung (100) nach Anspruch 11, wobei der Controller (110) so konfiguriert ist, dass er eine ausführbare Inhaltsliste in der entdeckten Vorrichtung anzeigt, die dem Vorrichtungsbild (311) entspricht, wenn eine Berührungsgesteneingabe auf dem Vorrichtungsbild (311) erkannt wird, das auf dem ersten Bildschirm (300) des Berührungsbildschirms (190) angezeigt wird.

14. Vorrichtung (100) nach Anspruch 11, wobei der Controller (110) so konfiguriert ist, dass er einen zweiten Bildschirm (315) anzeigt, der nach dem ersten Bildschirm (300) bereitgestellt wird und ein Zusatzbild enthält, das mindestens einem von einem Inhaltszusatzbild (315a), einem Vorrichtungszusatzbild (315b) und einem Anwendungszusatzbild (315c) entspricht, wenn eine Berührungsgesteneingabe auf dem ersten Bildschirm (300) des Berührungsbildschirms (190) erkannt wird.

## Revendications

1. Procédé d'exécution de contenu d'un dispositif filaire/sans fil connectable à un réseau (311), le procédé comprenant :
la découverte, par un appareil (100), d'un dispositif connectable à un réseau par le biais du réseau filaire/sans fil en utilisant une application prévue dans l'appareil (100) ;
la découverte, par l'appareil (100), de contenu exécutable depuis le dispositif connectable à un réseau découvert ;
l'affichage d'une icône de contenu (312) correspondant au contenu exécutable trouvé sur un premier écran (300) de l'appareil (100) ;
l'affichage d'une icône de dispositif (311) correspondant au dispositif connectable à un réseau découvert sur le premier écran (300) de l'appareil (100) ; et l'exécution du contenu exécutable trouvé par le biais du dispositif connectable à un réseau découvert, dans lequel l'exécution du contenu exécutable trouvé comprend :
la détection d'une entrée par toucher sur l'icône de contenu (312) affichée sur le premier écran (300) ; la détection d'un accès à l'icône de contenu touchée (312) sur l'icône de dispositif (311) ; et l'exécution du contenu exécutable trouvé correspondant à l'icône de contenu (312) par le dispositif connectable à un réseau découvert correspondant à l'icône de dispositif (311), en réponse à l'accès détecté.

2. Procédé selon la revendication 1, dans lequel la détection d'accès à l'icône de contenu touchée (312) sur l'icône de dispositif (311) comprend la détection que l'icône de contenu touchée (312) est déplacée vers l'icône de dispositif (311) par une entrée gestuelle par toucher.

3. Procédé selon la revendication 1, dans lequel lors de la détection de l'entrée par toucher sur l'icône de contenu (312), l'affichage d'une liste de contenu correspondant à l'icône de contenu touchée (312).

4. Procédé selon la revendication 1, comprenant en outre :
la détection d'une entrée par toucher sur l'icône de de dispositif (311) affichée sur le premier écran (300) ; et l'affichage d'une liste de contenu devant être exécutée par le dispositif connectable à un réseau découvert correspondant à l'icône de dispositif touchée (311).

5. Procédé selon la revendication 1, dans lequel la détection d'accès à l'icône de contenu touchée (312) sur l'icône de dispositif (311) comprend :
la distinction visuelle de l'icône de dispositif (311) selon que le contenu correspondant à l'icône de contenu touchée (312) peut ou ne peut pas être exécuté par le dispositif connectable découvert correspondant à l'icône de dispositif (311); et l'affichage, quand une pluralité de dispositifs correspondant à l'icône de dispositif (311) existent, d'une liste de dispositifs correspondant à la pluralité de dispositifs.

6. Procédé selon la revendication 1, dans lequel l'exécution du contenu correspondant à l'icône de contenu (312) comprend :
le téléchargement du contenu depuis un autre dispositif dans le dispositif connectable à un réseau découvert correspondant à l'icône de dispositif (311) ou la requête et le téléchargement du contenu vers l'autre dispositif par le dispositif connectable à un réseau découvert correspondant à l'icône de dispositif (311) ; et l'exécution du contenu téléchargé par le dispositif connectable à un réseau découvert correspondant à l'icône du dispositif (311).

7. Procédé selon la revendication 1, dans lequel l'exécution du contenu correspondant à l'icône de contenu (312) comprend :
le téléchargement du contenu depuis un autre dispositif stockant le contenu, et l'exécution du contenu téléchargé, par le dispositif connectable à un réseau découvert.

8. Procédé selon la revendication 1, dans lequel le réseau filaire/sans fil prend en charge la norme DLNA (Digital Living Network Alliance), et le dispositif connectable à un réseau découvert est inclus dans la classe DLNA.

9. Procédé selon la revendication 1, comprenant en outre l'affichage après une entrée gestuelle par toucher, d'un deuxième écran (315) affiché après le premier écran (300), incluant au moins une icône prise en charge par l'appareil (100).

10. Procédé selon la revendication 9, comprenant en outre :
la sélection d'une icône affichée sur le deuxième écran (315), dans lequel l'icône est sélectionnée en tant qu'une icône d'ajout de contenu (315a), une icône d'ajout de dispositif (315b), et une icône d'ajout d'application (315c) et l'affichage de l'icône sélectionnée sur le premier écran.

11. Appareil filaire/sans fil connectable à un réseau (100) comprenant un écran tactile (190) affichant un premier écran (300) ;
une unité d'interface de communication (130) connectable à un réseau filaire/sans fil ; et une unité de commande (110) configurée pour commander l'écran tactile (190) et l'unité d'interface de communication (130), dans lequel l'unité de commande (110) est configurée pour :
commander à l'écran tactile (190) d'afficher un dispositif découvert par l'unité d'interface de communication (130), une icône de dispositif (311) correspondant au dispositif découvert, et une icône de contenu (312) correspondant au contenu exécutable trouvé dans le dispositif découvert, et
commander au dispositif découvert correspondant à l'icône du dispositif (311) d'exécuter le contenu exécutable correspondant à l'icône de contenu (312) en réponse au déplacement de l'icône de contenu (312), sélectionnée par une entrée par toucher détectée, vers l'icône de dispositif (311).

12. Appareil (100) selon la revendication 11, dans lequel l'unité de commande (110) est configurée pour afficher une liste de contenu correspondant à l'icône de contenu (312), quand une entrée gestuelle par toucher est détectée sur l'icône de contenu (312) affichée sur le premier écran (300) de l'écran tactile (190).

13. Appareil (100) selon la revendication 11, dans lequel l'unité de commande (110) est configurée pour afficher une liste de contenu exécutable dans le dispositif découvert correspondant à l'icône de dispositif (311), quand une entrée gestuelle par toucher est détectée sur l'icône de dispositif (311) affichée sur le premier écran (300) de l'écran tactile (190).

14. Appareil (100) selon la revendication 11, dans lequel l'unité de commande (110) est configurée pour afficher un deuxième écran (315) présenté après le premier écran (300) et incluant une icône d'ajout correspondant à au moins l'une parmi une icône d'ajout de contenu (315a), icône d'ajout de dispositif (315b), et une icône d'ajout d'application (315c), quand une entrée gestuelle par toucher est détectée sur le premier écran (300) de l'écran tactile (190).
